**Europäisches Patentamt**

**European Patent Office**

**Office européen des brevets**

(19)

(11) Veröffentlichungsnummer: **0 031 479**
**B1**

(12) ## EUROPÄISCHE PATENTSCHRIFT

(45) Veröffentlichungstag der Patentschrift:
06.06.84

(51) Int. Cl.³: **F 24 J 3/02**

(21) Anmeldenummer: **80107571.4**

(22) Anmeldetag: **04.12.80**

(54) **Plattenförmiger Sonnenkollektor.**

(30) Priorität: **20.12.79 DE 2951362**

(43) Veröffentlichungstag der Anmeldung:
**08.07.81 Patentblatt 81/27**

(45) Bekanntmachung des Hinweises auf die Patenterteilung:
**06.06.84 Patentblatt 84/23**

(84) Benannte Vertragsstaaten:
**CH FR GB IT LI NL**

(56) Entgegenhaltungen:
CH - A - 402 364
DE - A - 2 555 015
DE - A - 2 639 354
DE - A - 2 712 153
DE - A - 2 738 924
GB - A - 2 009 138

(73) Patentinhaber: **ERNO Raumfahrttechnik Gesellschaft
mit beschränkter Haftung, Hünefeldstrasse 1-5,
D-2800 Bremen (DE)**

(72) Erfinder: **Dalstein, Rolf, Kiefernweh 3,
D-2805 Stuhr 2 (DE)**
Erfinder: **Spies, Johann, Joh. Eilersweg 2,
D-2805 Stuhr 4 (DE)**
Erfinder: **Greif, Hans-Dieter, Auf den Roden 32,
D-2805 Stuhr 1 (DE)**
Erfinder: **Termath, Günter, Dr., Pannhütte 50,
D-4660 Gelsenkirchen-Buer (DE)**
Erfinder: **Unbescheid, Jürgen, Schäferstrasse 6,
D-4660 Gelsenkirchen-Buer (DE)**
Erfinder: **Nowoczyn, Hans-Werner, Dr.,
Hofenbornstrasse 56, D-5100 Aachen (DE)**

## Beschreibung

Die Erfindung betrifft einen plattenförmigen Sonnenkollektor, bei dem das den Strahlenabsorber enthaltende Gehäuse durch zwei Silikatglasplatten und einen metallischen Distanzrahmen gebildet wird, der mit den Glasplatten am Rand gasdicht verbunden ist.

Bei einem bekannten Sonnenkollektor dieser Art ist der Distanzrahmen als Aluminiumblech gebildet, das zu einem rechteckigen Querschnitt gebogen ist, wobei sich die Blechenden auf der dem Innenraum des Kollektors zugewandten Seite überlappen, und die sich überlappenden Blechschenkel nicht miteinander verbunden sind (DE-U-7 715 441). Die so gebildeten Distanzrahmen sind mittels eines temperaturbeständigen Klebstoffs mit den Glasplatten verklebt. Der Klebstoff ist in der von dem gegenüber dem äußeren Rand der Glasplatten zurückgesetzten Distanzrahmen und den Randbereichen der Glasplatten gebildeten Fuge angeordnet.

Im Gegensatz zu vielen anderen bekannten Sonnenkollektoren weist eine Konstruktion der eingangs genannten Art infolge seines symmetrischen Aufbaus eine gute Formstabilität bei starken Temperaturschwankungen auf, weil der Boden des Kollektorgehäuses aus demselben Material wie die Abdeckplatte besteht. Infolgedessen entstehen hierbei keine unterschiedlichen Wärmedehnungen zwischen Boden und Abdeckplatte, die leicht zu einem Undichtwerden bzw. zu einem Ablösen der Randdichtungen führen. Auf der anderen Seite ist die Verbindung der beiden Glasplatten am Rand über den Distanzrahmen und den Klebstoff nicht hinreichend stabil und dauerhaft, um eine Evakuierung des Gehäuses zu erlauben. Gerade durch eine Evakuierung des Gehäuses aber tritt eine erhebliche Verbesserung des Wirkungsgrades eines Sonnenkollektors ein, weil dadurch die Wärmeabgabe durch Konvektion ganz erheblich herabgesetzt wird. Der gattungsgemäße Sonnenkollektor ist daher auch nicht evakuiert, sondern mit einem schweren Gas mit niedriger Wärmedurchgangszahl gefüllt.

Nach der DE-A-2 712 153 ist ein Sonnenkollektor mit einem evakuierten Zwischenraum bekannt, wobei zwischen einem Rand und dem evakuierten Zwischenraum ein zusätzlicher evakuierter Ringraum mit Adsorptionsstoffen und/oder von außen aktivierbaren Getterstoffen gebildet ist. Hierdurch sollen die durch thermischmechanische Beanspruchung der Sonnenenergiesammler entstehenden Leckagen verhindert werden.

Weiterhin ist nach der GB-A-2 009 138 bereits bekannt, Glasplatten über entsprechende Zwischenlagen in Form von metallisierten Bändern zu verlöten. Durch die Lötstellen wird aber die Steifigkeit nicht im Sinne einer Formstabilität erhöht.

Der Erfindung liegt die Aufgabe zugrunde, einen Sonnenkollektor der genannten Gattung so auszubilden, daß ein formstabiles, dauerhaftes und dichtes Gehäuse entsteht, das aufgrund seiner Konstruktion eine Evakuierung gestattet.

Der erfindungsgemäße Sonnenkollektor zeichnet sich dadurch aus, daß der Distanzrahmen aus einem im wesentlichen verwindungssteifen Metallprofil und aus auf beiden Seiten des Metallprofils angeordneten nachgiebigen Stegen aus einem leicht verformbaren Metall besteht, wobei die nachgiebigen Stege mit dem Metallprofil einerseits und mit den zu diesem Zweck im Randbereich metallisierten Glasplatten andererseits verlötet sind, und daß die Glasplatten aus vorgespanntem Glas bestehen.

Durch die Kombination dieser Merkmale wird ein Sonnenkollektor geschaffen, der einerseits eine hohe mechanische Stabilität und Verwindungssteifigkeit, und andererseits gleichzeitig eine hinreichende Elastizität in den Abdichtungsbereichen aufweist, um durch Wärmegradienten induzierte Spannungen abzubauen. Darüber hinaus ist durch die metallische Verbindung der Glasplatten eine optimale und dauerhafte Abdichtung gewährleistet, die auch gegenüber einem hohen Unterdruck oder Vakuum im Gehäuse eine dauerhafte Abdichtung darstellt. Ferner wird durch die Verwendung von vorgespannten Glasplatten die Biegefestigkeit und die Temperaturbeständigkeit des Sonnenkollektors erhöht. Insgesamt entsteht also ein Sonnenkollektor mit hohem Gebrauchswert und verbessertem Wirkungsgrad.

Das verwindungssteife Metallprofil des Distanzrahmens besteht vorzugsweise aus einem Rohrprofil, insbesondere mit rechteckigem Querschnitt, wobei die Rohrprofilabschnitte an den Ecken zumindest im inneren Bereich des Stoßes bis zu den nachgiebigen Stegen vakuumdicht zusammengeschweißt sind. Bei Verwendung eines solchen Rohrprofils ist es möglich, die äußere Wand des Profils zu durchbohren, und diese Bohrlöcher für Befestigungszwecke zu verwenden, ohne daß die vakuumdichte Abdichtung des Gehäuses dadurch beeinträchtigt würde.

Die auf beiden Seiten des Metallprofils angeordneten, zweckmäßigerweise angelöteten nachgiebigen Stege bestehen vorteilhafterweise aus einem Bleiband mit einer Dicke von 0,5 bis 2 mm und einer Breite von 5 bis 15 mm. Für die Verbindung dieser Bleibänder mit den Glasplatten eignen sich insbesondere Verfahren, wie sie für die Herstellung von randverlöteten Isolierglasscheiben bekannt sind. Solche Verfahren sind beispielsweise in der DE-C-902 085 und DE-B-1 204 370 im einzelnen beschrieben.

Der erfindungsgemäße Sonnenkollektor kann vollkommen symmetrisch aufgebaut sein. Das heißt, daß beide Silikatglasplatten voll durchlässig für die Sonnenstrahlung sind, so daß der mittig angeordnete Absorber von beiden Seiten in gleicher Weise von der Sonnenstrahlung beaufschlagt werden kann. Andererseits ist auch ein asymmetrischer Aufbau möglich, beispielsweise indem eine der beiden Silikatglasplatten mit einem reflektierenden Belag versehen ist, oder indem auf der der Einstrahlung abgewandten Seite des Absorbers eine reflektierende Folie zwischen dem Absorber und der Glasplatte zwischengeschaltet ist.

Zwischen den beiden Glasplatten sind vorteilhafterweise in Abständen von 5 bis 15 cm Abstandshalter angeordnet, die die Glasplatten gegenseitig abstützen, wenn das Kollektorgehäuse evakuiert ist. Diese Abstandshalter können beispielsweise als zylindrische Stifte ausgebildet sein, die ggf. an ihren beiden Enden mit dem Kopf versehen sind. Die an der Glasoberfläche anliegende Fläche dieser Abstandshalter ist vorzugsweise leicht ballig ausgebildet, d. h. sphärisch ausgewölbt. Dadurch wird vermieden, daß bei einer möglichen geringfügigen Verkantung der Abstandshalter örtliche Druckspitzen entstehen. Zu diesem Zweck kann man auch die Abstandshalter ganz oder zumindest in den an den Glasflächen anliegenden Bereichen aus einem duktilen, das heißt plastisch deformierbaren Metall herstellen. Ferner kann es vorteilhaft sein, die Abstandshalter insgesamt aus Glas herzustellen, wodurch eine eventuelle Abschattung der Absorberplatte durch die Abstandshalter vermieden wird.

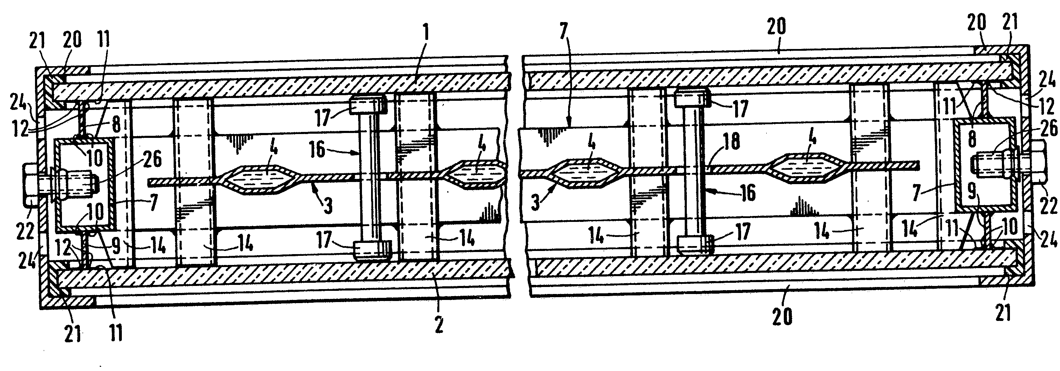

Weitere zweckmäßige Ausgestaltungen der Erfindung sind Gegenstand der abhängigen Patentansprüche und ergeben sich im übrigen aus der nachfolgenden Beschreibung eines bevorzugten Ausführungsbeispiels der Erfindung anhand der Zeichnung.

Die flächigen Wände des Gehäuses des Sonnenkollektors werden durch die obere Glasplatte 1 und die untere Glasplatte 2 gebildet. Die Glasplatten 1, 2 bestehen aus thermisch vorgespanntem Silikatglas und haben eine Dicke von 6 mm und eine Kantenlänge von etwa 150 × 50 cm. Die beiden Glasplatten 1, 2 sind in ihrem Randbereich mit einem metallischen Distanzrahmen vakuumdicht verbunden. Das Gehäuse ist evakuiert, und innerhalb des evakuierten Gehäuses ist der eigentliche Absorber beispielsweise in Form einer Absorberplatte 3 angeordnet, die Kanäle 4 aufweist, die von dem flüssigen Wärmeträger durchströmt werden. Die Anschlußrohre für die Kanäle 4 sind durch den Distanzrahmen nach außen geführt (nicht dargestellt), wobei die Anschlußrohre an der Stelle der Durchführung durch den Distanzrahmen mit diesem vakuumdicht verschweißt bzw. verlötet sind.

Der Distanzrahmen besteht aus einem Rechteckrohr 7, zweckmäßigerweise aus verzinktem Eisen. Die äußeren Abmessungen des Rechteckrohres 7 betragen 25 × 15 mm und seine Wandstärke 1,5 mm. Die einzelnen Rohrabschnitte sind auf Gehrung geschnitten und werden zu einem rechteckigen Rahmen zusammengeschweißt, wobei die Schweißverbindung an den Ecken im inneren Bereich des Stoßes bis zu den nachgiebigen Stegen vakuumdicht ist. Auf diesem Rechteckrohr 7 sind senkrecht zu der Rahmenebene oben und unten je ein nachgiebiger Steg 8 bzw. 9 aus einem Bleiband aufgelötet. Die Stege 8 und 9 haben eine Dicke von 1 mm und eine Höhe von etwa 10 mm. Die Lötnähte 10 sind wiederum vakuumdicht ausgeführt.

Zur Verbindung des Distanzrahmens mit den Glasplatten 1 und 2 sind diese in ihrem Randbereich auf der dem Distanzrahmen zugewandten Seite oberflächlich nach dem Metallspritzverfahren verkupfert und anschließend verzinnt, so daß entlang dem Rand der Glasscheiben eine dünne, in der Glasoberfläche fest verankerte Metallschicht 11 gebildet wird. Die Stege 8 und 9 sind mit dieser Metallschicht 11 verlötet, wobei wiederum die Lötnähte 12 vakuumdicht ausgeführt sind.

Auf dem Rechteckrohr 7 sind in Abständen von etwa 10 bis 15 cm entlang der Innenseite des Rahmens Randstützen 14 aus Metall befestigt, beispielsweise aufgelötet, deren Abmessungen in Richtung senkrecht zur Rahmenebene dem Abstand der Glasplatte 1 und 2 entsprechen. Diese Randstützen 14 sorgen dafür, daß die beim evakuierten Gehäuse auf die Glasplatten 1, 2 wirkenden Druckkräfte nicht von den nachgiebigen Stegen 8 und 9 übernommen, sondern von diesen Randstützen 14 aufgefangen werden.

Die Abstandshalter 16 sind über die gesamte Fläche des Sonnenkollektors in Abständen von 10 bis 15 cm zwischen den Glasplatten 1, 2 angeordnet. Sie sind als zylindrische Stifte mit verbreiterten Köpfen 17 ausgebildet. Die Anlageflächen dieser Köpfe 17 zu den Glasplatten sind ballig ausgeführt, d. h. in Form einer Kugelkalotte mit einem relativ großen Radius. Die Stifte bestehen insgesamt aus duktilem Kupfer und sind oberflächlich vernickelt bzw. verchromt.

Das Gehäuse ist von einem Rahmen aus einem im Querschnitt U-förmigen metallischen Kantenschutzprofil 20 eingefaßt, und zwar unter Zwischenschaltung von elastischen Profilstreifen 21 aus einem weichen Kunststoff. Das Kantenschutzprofil 20 ist mittels Schrauben 22 mit dem Profil 7 verschraubt, wobei als Muttern zum Befestigen der Schrauben 22 sogenannte Blindeinnietmuttern 26 verwendet werden, die von außen durch die für die Schraube 22 vorgesehene Bohrung auf der Schraube sitzend eingeschoben werden und sich beim Anziehen der Schraube ausbauchen bzw. spreizen. Das Kantenschutzprofil ist mit Durchbrechungen 24 versehen, die für eine Belüftung des Hohlraumes zwischen dem Kantenschutzprofil und dem Distanzrahmen 7, 8, 9 sorgen.

### Patentansprüche

1. Plattenförmiger Sonnenkollektor, bei dem das den Strahlenabsorber enthaltende Gehäuse durch zwei Silikatglasplatten (1, 2) und einen metallischen Distanzrahmen (7) gebildet wird, der mit den Glasplatten (1, 2) am Rand gasdicht verbunden ist, dadurch gekennzeichnet, daß der Distanzrahmen aus einem im wesentlichen verwindungssteifen Metallprofil (7), und aus auf dem Metallprofil (7) angeordneten nachgiebigen Stegen (8, 9) aus einem leicht verformbaren Metall besteht, wobei die nachgiebigen Stege (8, 9) mit dem Metallprofil (7) einerseits und mit den zu diesem Zweck im Randbereich metallisierten Glasplatten (1, 2) andererseits verlötet sind, und daß die Glasplatten (1, 2) aus vorgespanntem Glas bestehen.

2. Sonnenkollektor nach Anspruch 1, dadurch gekennzeichnet, daß die Stege (8, 9) aus einem Bleiband von 0,5 bis 2 mm Dicke und 5 bis 15 mm Breite bestehen.

3. Sonnenkollektor nach Anspruch 1 und 2, dadurch gekennzeichnet, daß das Gehäuse in bezug auf die Mittelebene, in der der Absorber angeordnet ist, einen symmetrischen Aufbau aufweist.

4. Sonnenkollektor nach Anspruch 1 bis 3, dadurch gekennzeichnet, daß das Metallprofil (7) des Distanzrahmens aus an den Ecken miteinander vakuumdicht verschweißten Vierkantrohrabschnitten besteht.

5. Sonnenkollektor nach Anspruch 1 bis 4, dadurch gekennzeichnet, daß das Gehäuse evakuierbar ist.

6. Sonnenkollektor nach Anspruch 1 bis 5, dadurch gekennzeichnet, daß zwischen den beiden Glasplatten (1, 2) diese gegenseitig abstützende Abstandshalter (14, 16) angeordnet sind.

7. Sonnenkollektor nach Anspruch 6, dadurch gekennzeichnet, daß die Abstandshalter (14, 16) zwischen den beiden Glasplatten (1, 2) in einer gegenseitigen Entfernung von 5 bis 15 cm angeordnet sind.

8. Sonnenkollektor nach Anspruch 6 und 7, dadurch gekennzeichnet, daß die Abstandshalter (16) in Form von an beiden Enden mit einem Kopf (17) versehenen Stiften ausgebildet sind, wobei die Anlageflächen der Köpfe (17) zur Glasoberfläche sphärisch gewölbt sind.

9. Sonnenkollektor nach einem der Ansprüche 6 bis 8, dadurch gekennzeichnet, daß die Abstandshalter (16) aus Glas bestehen.

10. Sonnenkollektor nach einem der Ansprüche 6 bis 8, dadurch gekennzeichnet, daß die Abstandshalter wenigstens in den an den Glasflächen anliegenden Bereichen aus einem duktilen Metall bestehen.

11. Sonnenkollektor nach einem der Ansprüche 6 bis 10, dadurch gekennzeichnet, daß die dem Rand benachbarten Abstandshalter (14) (Randstützen) auf der Innenseite des Metallprofils (7) in einem gegenseitigen Abstand von 5 bis 15 cm angeordnet sind.

12. Sonnenkollektor nach Anspruch 1 bis 3 und 5 bis 11, dadurch gekennzeichnet, daß das Metallprofil (7) des Distanzrahmens aus einem geschlossenen, im Querschnitt vorzugsweise rechteckigen Rohrprofil besteht, wobei die Rohrabschnitte an den Ecken vakuumdicht verschweißt sind.

13. Sonnenkollektor nach Anspruch 1 bis 12, dadurch gekennzeichnet, daß das Gehäuse am Rand von einem im Querschnitt U-förmigen Kantenschutzprofil (20) umgeben ist, das über ein elastisches Dichtungsprofil (21) auf den Stirnkanten der beiden Glasplatten aufliegt.

14. Sonnenkollektor nach Anspruch 13, dadurch gekennzeichnet, daß das Kantenschutzprofil (20) mit dem Metallprofil (7) verschraubt ist.

15. Sonnenkollektor nach Anspruch 13 oder 14, dadurch gekennzeichnet, daß das Kantenschutzprofil (20) mit Durchbrechungen (24) zur Belüftung des Hohlraumes zwischen dem Distanzrahmen (7, 8, 9) und dem Kantenschutzprofil (20) versehen ist.

## Claims

1. Panel-type solar collector with a housing containing the beam absorber and formed by two silicate glass plates (1, 2) and a metallic spacing frame (7) connected at the edges to the glass plates (1, 2) in a gas-tight manner, the collector being characterized by the fact that the spacing frame consists of an essentially torsionally rigid metal section (7) and of non-rigid webs (8, 9) of easily formable metal arranged on the metal section (7), with the non-rigid webs (8, 9) soldered to the metal section (7) on the one hand an to the glass plates (1, 2), metallized for this purpose at the edges, on the other hand, and that the glass plates (1, 2) are made of tempered glass.

2. Solar collector as per claim 1, characterized by the fact that the webs (8, 9) consist of a leaden strip of 0,5 to 2 mm thickness and 5 to 15 mm width.

3. Solar collector as per claim 1 and 2, characterized by the fact that the housing shows a symmetric structure relative to the center plane in which the absorber is arranged.

4. Solar collector as per claims 1 to 3, characterized by the fact that the metal section (7) of the spacing frame consists of rectangular tube segments welded to each other at the corners in a vacuum-tight manner.

5. Solar collector as per claims 1 to 4, characterized by the fact that the housing can be evacuated.

6. Solar collector as per claims 1 to 5, characterized by the fact that spacers (14, 16) are arranged between the two glass plates (1, 2) supporting the latter.

7. Solar collector as per claim 6, characterized by the fact that the spacers (14, 16) between the two glass plates (1, 2) are arranged at a distance of 5 to 15 cm to one another.

8. Solar collector as per claims 6 and 7, characterized by the fact that the spacers (16) have the form of pins provided at both ends with a head (17), the contact surfaces of the heads (17) being spherically curved towards the glass surface.

9. Solar collector as per one of the claims stated under 6 to 8, characterized by the fact that the spacers (16) are made of glass.

10. Solar collector as per one of the claims stated under 6 to 8, characterized by the fact that the spacers are made of ductile metal at least in the areas adjacent to the glass surfaces.

11. Solar collector as per claims 6 to 10, characterized by the fact that the spacers (14) in the vicinity of the edge (edge supports) are arranged at a distance of 5 to 15 cm to one another on the inside of the metal section (7).

12. Solar collector as per claims 1 to 3 and 5 to 11, characterized by the fact that the metal section (7) of the spacing frame consists of a closed tube section with a preferably rectangular cross-section, the individual segments of the tube being welded at the corners in a vacuum-tight manner.

13. Solar collector as per claims 1 to 12, characterized by the fact that the edge of the housing is surrounded by a channel-type edge section (20) supported by the front edges of the two glass plates via an elastic gasket (21).

14. Solar collector as per claim 13, characterized by the fact that the edge section (20) is screwed to the metal section (7).

15. Solar collector as per claims 13 or 14, characterized by the fact that the edge section (20) is provided with openings (24) to ventilate the space between the spacing frame (7, 8, 9) and the edge section (20).

**Revendications**

1. Collecteur solaire sous forme de plaques où le boîtier renfermant l'absorbeur de radiation est formé par deux plaques de verre de silicate (1, 2) et un cadre d'écartement métallique (7) qui, sur le pourtour, est joint aux plaques de verre (1, 2) de manière étanche aux gaz, caractérisé par le fait que le cadre d'écartement est constitué d'un profilé métallique (7) essentiellement résistant à la torsion et de traverses souples (8, 9) fabriquées à partir d'un métal facilement déformable et disposées sur le profilé métallique (7), les traverses souples (8, 9) étant brasées d'une part sur le profilé métallique (7) et d'autre part sur les plaques de verre (1, 2) dont le bord a été métallisé à cette fin, et par le fait que les plaques de verre (1, 2) sont constituées de verre trempé.

2. Collecteur solaire suivant revendication 1, caractérisé par le fait que les traverses (8, 9) sont constituées d'une bande en plomb de 0,5 à 2 mm d'épaisseur et de 5 à 15 mm de large.

3. Collecteur solaire suivant revendications 1 et 2, caractérisé par le fait que le boîtier présente une structure symétrique par rapport au plan médian où se trouve aménagé l'absorbeur.

4. Collecteur solaire suivant revendications 1 à 3, caractérisé par le fait que le profilé métallique (7) du cadre d'écartement est constitué de tronçons de tubes carrés, dont les angles sont soudés étanches au vide.

5. Collecteur solaire suivant revendications 1 à 4, caractérisé par le fait qu'il est possible d'obtenir le vide à l'intérieur du boîtier.

6. Collecteur solaire suivant revendications 1 à 5, caractérisé par le fait qu'entre les deux plaques de verre (1, 2) se trouvent disposées des entretoises (14, 16) servant à l'étayement mutuel de ces plaques.

7. Collecteur solaire suivant revendication 6, caractérisé par le fait que les entretoises (14, 16) entre les deux plaques de verre (1, 2) sont disposées de telle manière que la distance entre elles est de 5 à 15 cm.

8. Collecteur solaire suivant revendications 6 et 7, caractérisé par le fait que les entretoises (16) se présentent sous forme de tiges qui, à leurs extrémités, sont équipées de têtes (17) dont les surfaces d'appui en contact avec la surface de verre présentent une courbure sphérique.

9. Collecteur solaire suivant une des revendications 6 à 8, caractérisé par le fait que les entretoises (16) sont en verre.

10. Collecteur solaire suivant une des revendications 6 à 8, caractérisé par le fait que les entretoises sont constituées, au moins dans les zones en contact avec les surfaces de verre, d'un métal ductile.

11. Collecteur solaire suivant une des revendications 6 à 10, caractérisé par le fait que les entretoises (14) voisines du bord (appuis extrêmes) sont disposées sur la face interne du profilé métallique (7) de façon telle que la distance entre elles est de 5 à 15 cm.

12. Collecteur solaire suivant revendications 1 à 3 et 5 à 11, caractérisé par le fait que le profilé métallique (7) du cadre d'écartement est constitué d'un profilé tubulaire dont la section est, de préférence, rectangulaire, les angles des tronçons tubulaires étant soudés étanches au vide.

13. Collecteur solaire suivant revendications 1 à 12, caractérisé par le fait que le boîtier est entouré d'un profilé protège-arête (20) avec section en U qui, à travers d'un joint d'étanchéité profilé élastique (21), repose sur les arêtes avant des deux plaques de verre.

14. Collecteur solaire suivant revendication 13, caractérisé par le fait que le profilé protège-arête (20) est boulonné au profilé métallique (7).

15. Collecteur solaire suivant revendications 13 et 14, caractérisé par le fait que le profilé protège-arête (20) est pourvu d'ouvertures (24) servant à ventiler la cavité entre le cadre d'écartement (7, 8, 9) et le profilé protège-arête (20).